# EUROPÄISCHE PATENTSCHRIFT

(11) **EP 1 586 805 B1**
(45) Veröffentlichungstag und Bekanntmachung des Hinweises auf die Patenterteilung: **23.07.2008**
(21) Anmeldenummer: 05006947.5
(22) Anmeldetag: 30.03.2005
(51) Int. Cl.: F16P 3/14, G08B 13/196

(54) **Verfahren zur Überwachung eines Überwachungsbereichs**
Method for monitoring a surveillance area
Procédé pour surveiller une zone de surveillance

(30) Priorität: 14.04.2004 DE 102004018016
(43) Veröffentlichungstag der Anmeldung: 19.10.2005
(73) Patentinhaber: SICK AG, 79183 Waldkirch (DE)
(72) Erfinder: Braune, Ingolf, 79194 Gundelfingen (DE); Grabinger, Jörg, 79312 Emmendingen (DE)
(74) Vertreter: Manitz, Finsterwald & Partner GbR

(56) Entgegenhaltungen:
- EP-A- 1 061 487
- DE-A1- 10 026 711
- DE-A1- 10 049 366
- DE-A1- 19 709 799

## Beschreibung

Die vorliegende Erfindung betrifft ein Verfahren zur Überwachung eines Überwachungsbereichs, insbesondere eines Überwachungsbereichs neben und/oder in einer Vorrichtung mit wenigstens einem angetriebenen beweglichen Teil, gemäß den Merkmalen des Oberbegriffs des Anspruchs 1. Ein derartiges Verfahren ist aus der DE 100 26 711 A1 bekannt.

Verfahren der oben genannten Art sind grundsätzlich bekannt und können dazu eingesetzt werden, Bereiche nahe und/oder in Vorrichtungen mit wenigstens einem beweglichen Teil, beispielsweise Maschinen, zu überwachen, die unter ungünstigen Umständen das Bedienungspersonal verletzen könnten. Beispiele für solche Maschinen sind Gesenkbiegepressen, bei denen ein Biegestempel ein Blech gegen ein Biegewerkzeug drückt und dieses dabei verformt, Scheren, Stanzen oder Roboter.

Um eine möglichst hohe Produktivität durch geringe Stillstands- bzw. Störzeiten einer solchen Maschine erreichen zu können, ist es wünschenswert, dass bei einem Verfahren der oben genannten Art eine Gefährdung für das Bedienungspersonal möglichst zweifelsfrei erkannt und von anderen Vorgängen bzw. Bewegungen anderer Gegenstände im Bereich der Maschine unterschieden werden kann, damit die Maschine möglichst nur bei einer tatsächlichen Gefährdung angehalten zu werden braucht.

Ein solches Verfahren sollte in Echtzeit durchführbar sein, damit die normale Arbeitsgeschwindigkeit an einer solchen Maschine nicht beeinträchtigt wird.

Der vorliegenden Erfindung liegt daher die Aufgabe zugrunde, ein Verfahren zur Überwachung eines Überwachungsbereichs neben und/oder in einer Vorrichtung mit wenigstens einem angetriebenen beweglichen Teil bereitzustellen, das eine gute Erkennung einer Gefährdung des Bedienungspersonals durch die Vorrichtung ermöglicht und gleichzeitig schnell ausführbar ist.

Die Aufgabe wird gelöst durch ein Verfahren mit den Merkmalen des Anspruchs 1.

Bei dem erfindungsgemäßen Verfahren zur Überwachung eines Überwachungsbereichs neben und/oder in einer Vorrichtung mit wenigstens einem angetriebenen beweglichen Teil werden Videobilder verwendet, die in zeitlicher Folge von wenigstens zwei Videokameras erfasst wurden, deren Sichtfelder sich wenigstens teilweise in einem Überschneidungsbereich in dem Überwachungsbereich überschneiden. Auf der Basis der von einer ersten der Videokameras erfassten ersten Videobilder wird eine erste und auf der Basis der von einer zweiten der Videokameras erfassten zweiten Videobilder eine zweite Erkennung und/oder Verfolgung von Objekten durchgeführt, die Gegenständen wenigstens in dem Überschneidungsbereich entsprechen. Zur Klassifizierung und/oder Bestimmung der Lage und/oder Bewegung wenigstens eines Gegenstands in dem Überschneidungsbereich werden dem Gegenstand entsprechende Objekte der ersten und zweiten Objekterkennung und/oder -verfolgung ermittelt und für beide Objekte bei deren Objekterkennung und/oder -verfolgung jeweils ermittelte Daten ausgewertet. In Abhängigkeit von der Auswertung wird wenigstens ein Überwachungssignal gebildet.

Bei dem erfindungsgemäßen Verfahren werden Videobilder verwendet, die von wenigstens zwei Videokameras erfasst wurden. Bei den Videobildern kann es sich grundsätzlich um infrarote, monochrome oder auch farbige Videobilder handeln, zu deren Erfassung die Videokameras dann geeignet ausgebildet sein müssen.

Die Sichtfelder der Videokameras überschneiden sich in einem Überschneidungsbereich, der wenigstens teilweise in dem Überwachungsbereich liegt, diesen aber nicht vollständig zu umfassen braucht. Die Videokameras sind dabei vorzugsweise so angebracht, dass sich in dem Überwachungsbereich möglichst wenige verdeckte Bereiche ergeben.

Um die Information in den Videobildern der beiden Videokameras miteinander verknüpfen zu können, sind vorzugsweise deren relative Lage und Ausrichtung zueinander sowie deren Abbildungseigenschaften explizit oder - durch geeignete Kalibrierungsverfahren - wenigstens implizit bekannt.

Die Videobilder werden in zeitlicher Folge und besonders bevorzugt synchron erfasst, so dass die aus den Videobildern gewonnenen Informationen der beiden Videokameras Videobild für Videobild einfach miteinander verknüpft werden können. Auf diese Weise entstehen wenigstens eine erste mit einer ersten der beiden Videokameras erfasste Folge von Videobildern und eine zweite mit der zweiten Videokamera erfasste Folge von Videobildern.

Erfindungsgemäß wird für jede der Videobildfolgen eine Objekterkennung und/oder -verfolgung durchgeführt, bei der Gegenständen in den Videobildern entsprechende Objekte erkannt und/oder verfolgt werden. Unter einem Gegenstand wird im Rahmen der Erfindung nicht nur ein räumlich von anderen Körpern getrennter Körper verstanden, sondern beispielsweise auch ein abgrenzbarer Teil einer zusammengesetzten oder mehrgliedrigen Vorrichtung, beispielsweise ein Segment eines Roboterarms.

Unter einem Gegenstand wird im Rahmen der Erfindung weiterhin der Einfachheit halber auch ein Lebewesen, insbesondere ein Mensch, oder ein Teil desselben verstanden. Für diese Objekterkennung und/oder -verfolgung können grundsätzlich bekannte Verfahren zur Erkennung und/oder Verfolgung von Objekten in zweidimensionalen Videobildern verwendet werden, die vorzugsweise voneinander unabhängig durchgeführt werden können. Um eine Objektverfolgung, beispielsweise bei teilverdeckten Objekten zu erleichtern, ist jedoch eine Kopplung der Verfahren nicht ausgeschlossen. Die Objekte können insbesondere durch Merkmale oder Merkmalskombinationen in den Videobildern, die den Gegenstand in dem Videobild gegenüber seiner Umgebung definieren, gegeben sein.

Gegenständen, die in beiden Videobildern sichtbar sind, werden bei beiden Objekterkennungs- und/oder -verfolgungsverfahren Objekte zugeordnet, für die aus ihrer jeweiligen Objekterkennung und/oder -verfolgung Daten in Bezug auf eine Klassifizierung und/oder Lage und/oder Bewegung, d.h. insbesondere Bewegungsrichtung und/oder -geschwindigkeit, bekannt sein können.

Die Objekterkennungs- und/oder -verfolgungsverfahren können insbesondere in Zyklen durchgeführt werden, in denen jeweils aktuelle Videobilder der jeweiligen Videobildfolge verarbeitet werden.

Auf der Basis der Daten über die beiden, demselben Gegenstand entsprechenden Objekte können Daten über Eigenschaften des Gegenstands, insbesondere einen Typ, d.h. eine Klassifizierung, und/oder dessen Lage und/oder dessen Bewegung, insbesondere dessen Bewegungsrichtung und/oder -geschwindigkeit, ermittelt werden.

Dabei können die Daten in Bezug auf die Lage und/oder die Bewegung aufgrund der unterschiedlichen Perspektiven der Videokameras vorzugsweise entsprechende Koordinaten im dreidimensionalen Raum umfassen und so mehr und/oder genauere Informationen liefern, als eine Objekterkennung und/oder -verfolgung auf der Basis nur einer Folge von Videobildern.

In Abhängigkeit von den so ausgewerteten Daten kann dann ein Überwachungssignal gebildet werden, das beispielsweise entsprechenden Warneinrichtungen oder einer Steuerung der Vorrichtung mit dem angetriebenen, beweglichen Teil zugeführt werden kann. Das Überwachungssignal braucht dabei nicht in jedem Zyklus gebildet zu werden, sondern beispielsweise nur, wenn ein vorgegebenes Kriterium z.B. für eine Gefährdung erfüllt ist. Dieses Überwachungssignal braucht insbesondere nur anzuzeigen, dass eine Gefährdung überhaupt vorliegt. Vorzugsweise würden jedoch auch zusätzliche Daten in Bezug auf die Lage und/oder Bewegung eines gefährdeten oder gefährdenden Gegenstandes bzw. eines entsprechenden Objekts ausgegeben.

Dieses Vorgehen erlaubt eine höhere Arbeitsgeschwindigkeit als ein Verfahren, bei dem zunächst aus Videobildern von wenigstens zwei Videokameras dreidimensionale Stereobilder gebildet werden, auf der Basis derer dann eine einzelne Objekterkennung und/oder -verfolgung durchgeführt kann. Dies ist unter anderem darauf zurückzuführen, dass bei einer Fusion der Videobilder zweier Videokameras zu dreidimensionalen Stereobildern die Videobilder immer wieder, zumindest auf der Skala von einigen Pixeln, aufeinander ausgerichtet werden müssen, was erheblichen Rechen- und/oder Zeitaufwand erfordert.

Durch die Verwendung von wenigstens zwei verschiedenen Perspektiven des Überschneidungsbereichs wird darüber hinaus auch eine gute Erkennung von Objekten erleichtert, die beispielsweise aufgrund einer ungünstigen Perspektive in nur einem Videobild schwer zu identifizieren wären.

Weiterbildungen und bevorzugte Ausführungsformen der Erfindung sind in den Ansprüchen, der Beschreibung und den Zeichnungen beschrieben.

Objekte in den Videobildern können grundsätzlich anhand beliebiger geeigneter Merkmale erkannt werden. Da sich im Bereich von Maschinen häufig Personen befinden, deren Kontur sich bei einer Bewegung ändert, ist es bevorzugt, dass zur Definition von Objekten in den Videobildern zusammenhängende Bereiche ermittelt werden, die Oberflächenbereichen auf einem einem Objekt entsprechenden Gegenstand entsprechen, die gemäß wenigstens einem vorgegebenen Kriterium ähnliche Oberflächeneigenschaften aufweisen. Auch eine Wiedererkennung solcher Objekte kann dann auf der Basis dieser Oberflächeneigenschaften erfolgen, so dass die Kontur nur eine untergeordnete Rolle zu spielen braucht.

Dabei ist es besonders bevorzugt, dass zur Definition der Objekte in den Videobildern zusammenhängende Bereiche ermittelt werden, die gemäß wenigstens einem vorgegebenen Kriterium ähnliche Grauwerte und/oder Farben und/oder Texturen aufweisen. Als Kriterium können dabei grundsätzlich bekannte Ähnlichkeitskriterien verwendet werden, beispielsweise bei der Verwendung von Farben Kriterien in Bezug auf Farbabstände im Farbraum.

Um die Zuordnung von Objekten der beiden Objekterkennungen und/oder -verfolgungen zu demselben Gegenstand und damit auch zueinander zu erleichtern, ist es bevorzugt, dass den Objekten wenigstens eine Objektklasse zugewiesen wird. Dazu können bei dem Verfahren jeweils Objektklassen für Objekte vorgegeben sein, die Gegenständen eines für den Zweck des Verfahrens geeigneten Typs entsprechen. Beispielsweise können Objektklassen für Personen, Werkstücke oder auch Maschinenteile vorgesehen sein. So können beispielsweise zwei Objekte der gleichen Objektklasse, die in Videobildern sowohl der ersten als auch der zweiten Videokamera in sich entsprechenden Raumbereichen auftreten, einfach als demselben Gegenstand entsprechend erkannt werden, der dann den der jeweiligen Objektklasse entsprechenden Typ aufweist.

Die Zuweisung einer Objektklasse kann beispielsweise in Abhängigkeit von Grauwerten und/oder Farben und/oder Texturen und/oder Konturen eines Objekts erfolgen. Jedoch können sich in Abhängigkeit beispielsweise von Beleuchtungsbedingungen oder auch von einer Verschmutzung beispielsweise Grauwerte oder Farben ändern. Es ist daher bevorzugt, dass auf Objekten vorgegebene Merkmale erkannt werden, und dass den Objekten in Abhängigkeit von den erkannten, vorgegebenen Merkmalen wenigstens eine Objektklasse zugeordnet wird. Bei diesen Merkmalen kann es sich insbesondere um kooperative Ziele handeln. Weiterhin können vorgegebene Markierungen, beispielsweise Oberflächenabschnitte mit einem vorgegebenen Muster, verwendet werden, um bestimmte Gegenstände zu kennzeichnen und eine Klassifizierung zu ermöglichen. Die Markierungen sind daher als Merkmal aufzufassen, mittels dessen eine Einordnung in Objektklassen vorgenommen werden kann.

Für die Zwecke der Überwachung genügt es in einigen Fällen, nur bewegliche Gegenstände zu erkennen, da häufig statische Gegenstände, insbesondere Wände, fest montierte Träger oder ähnliche Einrichtungen, kein Gefahrenpotential darstellen. Es ist daher bevorzugt, dass bei der Objekterkennung und/oder -verfolgung nur bewegliche Objekte erkannt bzw. verfolgt werden. Hierdurch kann die Verarbeitung der Videobilder stark beschleunigt werden.

Zur Erkennung von beweglichen Objekten ist es besonders bevorzugt, dass zur Ermittlung wenigstens eines beweglichen Objekts aus den verwendeten Videobildern ein sich im Laufe der Zeit nicht bewegender und/oder verändernder Hintergrund eliminiert wird. Insbesondere kann hierzu ein Videobild des Hintergrundes ohne bewegliche Objekte erfasst werden. Zur Objekterkennung und/oder -verfolgung kann dann ein Differenzbild zwischen einem aktuell erfassten Videobild und dem von der entsprechenden Videokamera erfassten Hintergrundbild gebildet werden, das dann zur Objekterkennung und/oder -verfolgung weiterverarbeitet wird. Durch die sich aus diesem Vorgehen ergebende Reduzierung der Anzahl von Merkmalen in den Videobildern kann sich neben einer deutlich erhöhten Arbeitsgeschwindigkeit des Verfahrens auch eine bessere Erkennung und/oder Verfolgung von Objekten ergeben.

Um die Verarbeitung der Videobilder zu beschleunigen, ist es bevorzugt, dass wenigstens für eine vorläufige Auswertung der Videobilder wenigstens einer Videokamera die zeitliche und/oder räumliche Auflösung der Videobilder reduziert wird. Vorzugsweise werden nach einer Ermittlung von für die weitere Auswertung interessanten Bereichen diese mit höherer Auflösung weiterverarbeitet. Beispielsweise kann die Auflösung in zeitlicher Hinsicht durch Verwendung nur nicht unmittelbar aufeinander folgender Bilder, beispielsweise nur jedes zweiten Bildes, reduziert werden.

Zur räumlichen Reduktion der Auflösung können entsprechende Filter verwendet werden. Beispielsweise können vorgegebene Pixelzeilen oder -spalten oder schachbrettartig angeordnete Pixel bei der vorläufigen Verarbeitung unberücksichtigt bleiben.

Die gemeinsame Verarbeitung der Daten in Bezug auf Objekte, die demselben Gegenstand entsprechen, kann auf unterschiedliche Art und Weise erfolgen. Bei einer Ausführungsform des erfindungsgemäßen Verfahrens ist es bevorzugt, dass demselben Gegenstand entsprechenden Objekten der ersten und zweiten Objekterkennung und/oder -verfolgung ein Fusionsobjekt zugeordnet wird, dessen Lage und/oder Bewegung und/oder Eigenschaften in Abhängigkeit von Daten in Bezug auf die Lagen und/oder Bewegungen und/oder Eigenschaften der dem Gegenstand entsprechenden Objekte ermittelt werden. Die Bewegung des Fusionsobjekts kann dabei insbesondere durch eine Bewegungsrichtung und eine Bewegungsgeschwindigkeit geben sein, es genügt jedoch eine dieser Angaben.

Dabei ist es besonders bevorzugt, dass dem Fusionsobjekt als Eigenschaft auch eine räumliche Ausdehnung zugeordnet wird. Diese kann sich aus den Ausdehnungen der dem Gegenstand bzw. dem Fusionsobjekt entsprechenden Objekte und/oder deren relativen Lage zueinander ergeben. Insbesondere ist es möglich, zur Definition der räumlichen Ausdehnung die Objektklassen der verwendeten Objekte heranzuziehen. Dazu kann in Abhängigkeit von den Objektklassen der einem Gegenstand entsprechenden Objekte dem entsprechenden Fusionsobjekt ein entsprechender, ggf. zu skalierender Referenzkörper zugeordnet werden. Beispielsweise könnte ein erkannter Unterarm einer Bedienperson durch einen Zylinder dargestellt werden, dessen Dimensionen aus den relativen Anordnungen der Videokameras zueinander und zu dem Arm und den in den Videobildern erfassten Flächen und Lagen der entsprechenden Objekte in Verbindung mit den Abbildungseigenschaften der Videokameras geschätzt wird. Ein solches Fusionsobjekt kann so allgemein einen dreidimensionalen, insbesondere mehrgliedrigen Körper repräsentieren, der eine vorgegebene Form und Größe sowie Lage und/oder Geschwindigkeit und/oder Bewegungsrichtung aufweist. Die Verwendung solcher Fusionsobjekte ermöglicht eine modellhafte Darstellung der Lagen und Bewegungen von Gegenständen oder Teilen derselben im Raum und erleichtert so insbesondere die Erkennung von Gefährdungssituationen für Bedienungspersonal der Vorrichtung.

Es ist dann besonders bevorzugt, dass nach Bildung eines Fusionsobjekts in einem Zyklus dessen Daten in Bezug auf dessen Lage und/oder Bewegung und/oder Eigenschaften in Abhängigkeiten von den Daten der dem Gegenstand entsprechenden Objekte in Bezug auf deren Lagen und/oder Bewegungen und/oder Eigenschaften in wenigstens einem folgenden Zyklus aktualisiert werden. Dieses Vorgehen erlaubt es, eine Bahn des Fusionsobjekts oder mehrerer Bahnen der Einzelobjekte des Fusionsobjekts im Laufe der Zeit zu verfolgen.

Wurden in einem Zyklus Fusionsobjekte erkannt bzw. gebildet, ist es bevorzugt, dass in dem Fall, dass bei der Objektverfolgung eines einem Fusionsobjekt zugeordneten Objekts dieses in einem aktuellen Videobild nicht erkannt wird, zur Ermittlung von Daten in Bezug auf die Lage und/oder Bewegung und/oder Eigenschaften des Fusionsobjekts nur die Daten eines anderen, dem Fusionsobjekt zugeordneten Objekts in Bezug auf dessen Lage und/oder Bewegung und/oder Eigenschaften verwendet werden. Bei einer vorübergehenden, vollständigen Verdeckung eines Objekts in einem der Videobilder kann so trotzdem noch eine Überwachung auf der Basis des anderen Videobildes erfolgen.

Häufig kann der Fall auftreten, dass bei einer Objektverfolgung und/oder bei einer Bildung von Fusionsobjekten für verschiedene Teile eines Gegenstands bzw. einer Person, jeweils getrennt Objekte bzw. Fusionsobjekte ermittelt werden, deren mögliche Lagen zueinander beispielsweise durch eine Kopplung der entsprechenden Teile des Gegenstands eingeschränkt sein können. Es ist daher bevorzugt, dass aus wenigstens zwei Objekten und/oder Fusionsobjekten, deren Bewegung gekoppelt ist, eine Objekt- bzw. Fusionsobjektgruppierung gebildet wird.

Die Zuordnung von Objekten bzw. Fusionsobjekten zu einer Objekt- bzw. Fusionsobjektgruppierung und damit die Bildung der Gruppierung aus den entsprechenden Objekten bzw. Fusionsobjekten können dabei auf der Basis unterschiedlicher Kriterien erfolgen. So kann beispielsweise anhand in den Videobildern erkannter Bewegungsabläufe der Objekte bzw. Fusionsobjekte ermittelt werden, ob eine Kopplung zwischen diesen vorliegt.

Weiterhin ist es möglich, bei der Prüfung, ob zwei Objekte bzw. Fusionsobjekte zu einer Objekt- bzw. Fusionsobjektgruppierung zusammengefasst werden sollen, deren relative Lage zueinander und die Klassen der Objekte bzw. der den Fusionsobjekten zugrunde liegenden Objekte oder auch Klassen der Fusionsobjekte selbst zu verwenden.

Weiterhin ist es bevorzugt, Objekte und/oder Fusionsobjekte zur Bildung einer Objekt- bzw. Fusionsobjektgruppierung in Abhängigkeit davon zu erkennen, ob auf diesen vorgegebene Merkmale erkannt werden und ob diese ein vorgegebenes Kriterium in Bezug auf ihre Relativlage zueinander erfüllen. Bei den Merkmalen kann es sich insbesondere um vorgegebene kooperative Ziele handeln. Weiterhin können entsprechende, auf der Oberfläche der Gegenstände angebrachte vorgegebene Markierungsbereiche verwendet werden, wie sie bereits zuvor erwähnt wurden.

Um eine einfache Interpretation der Situation in dem Überwachungsbereich zu ermöglichen, ist es bevorzugt, dass wenigstens einem Fusionsobjekt und/oder einer Objekt- bzw. Fusionsobjektgruppierung eine Fusionsobjektklasse bzw. eine Klasse für Objekt- bzw. Fusionsobjektgruppierungen zugeordnet wird. Die Fusionsobjektklassen bzw. die Klassen für Objekt- bzw. Fusionsobjektgruppierungen können, ähnlich wie die Objektklassen für die Objekte der zweidimensionalen Bildverarbeitung bzw. Objektverfolgung, dazu dienen, Fusionsobjekte bzw. Objekt- oder Fusionsobjektgruppierungen, die Gegenständen oder Teilen von Gegenständen eines vorgegebenen Typs entsprechen, entsprechend einzuordnen, und so die Überwachung des Überwachungsbereichs zu erleichtern.

Die Zuordnung von Klassen kann dabei in Abhängigkeit von wenigstens einem Zuordnungskriterium erfolgen.

Bei einer Ausführungsform des erfindungsgemäßen Verfahrens ist es bevorzugt, dass auf Objekten vorgegebene Merkmale erkannt werden, und dass den Fusionsobjekten und/oder Objekt- bzw. Fusionsobjektgruppierungen in Abhängigkeit von den erkannten, vorgegebenen Merkmalen auf den Fusionsobjekten bzw. Objekt- bzw. Fusionsobjektgruppierungen zugeordneten Objekten wenigstens eine Fusionsobjektklasse bzw. Klasse für Objekt- bzw. Fusionsobjektgruppierungen zugeordnet wird. Insbesondere können als vorgegebene Merkmale kooperative Ziele verwendet werden. Weiterhin können entsprechende Markierungsflächen auf verschiedenen Teilen eines Gegenstandes angebracht werden, die einer Objekt- oder Fusionsobjektgruppierung entsprechen. Beispielsweise könnte für eine Bedienperson auf Arbeitshandschuhen und den Ärmeln der Arbeitskleidung entsprechende Aufnäher mit einer leicht erkennbaren charakteristischen Markierung angebracht werden. Die dem Ärmel und dem Handschuh entsprechenden Fusionsobjekte könnten dann unter Verwendung der auf diesen befindlichen Aufnäher einfach der entsprechenden Fusionsobjektgruppierung zugeordnet werden.

Eine weitere Variante zur Klassifizierung von Fusionsobjekten oder Funktionsobjektgruppierungen besteht darin, dass eine Klasse gelernt wird. Dazu ist es bevorzugt, dass auf der Basis der Videobilder geprüft wird, ob eine Person oder ein Gegenstand für eine vorgegebene Mindestdauer ein vorgegebenes stationäres kooperatives Ziel berührt, und dass in diesem Fall die entsprechenden Merkmale zur Definition einer Klasse für ein zulässiges und zu schützendes Fusionsobjekt bzw. eine zulässige und zu schützende Fusionsobjektgruppierung verwendet werden. Das kooperative Ziel kann dabei insbesondere durch wenigstens ein vorgegebenes Merkmal in dem Videobild gegeben sein.

Zur Zuordnung von Klassen zu Objekten, Fusionsobjekten oder Gruppierungen ist es weiterhin bevorzugt, dass einem Objekt und/oder einem Fusionsobjekt und/oder einer Objekt- und/oder Fusionsobjektgruppierung eine Klasse für Objekte bzw. Fusionsobjekte bzw. Objekt- bzw. Fusionsobjektgruppierungen in Abhängigkeit davon zugeordnet wird, ob wenigstens ein Abschnitt des Objekts bzw. des Fusionsobjekts bzw. der Objekt- bzw. Fusionsobjektgruppierung in einen vorgegebenen Abschnitt des Überwachungsbereichs, insbesondere des Überschneidungsbereichs, bewegt wird. Dabei wird ausgenutzt, dass häufig im Bereich vor Maschinen zu bearbeitende Werkstücke nur aus einem klar definierten Raumbereich in den Überwachungs- bzw. Überschneidungsbereich eintreten können und dass es sich bei in den Raumbereich eintretenden Gegenständen nur um Werkstücke handeln kann.

Weiterhin ist es bevorzugt, dass zur Klassifizierung eine Form des Objekts bzw. eines Fusionsobjekts bzw. einer Objekt- oder Fusionsobjektgruppierung verwendet wird. Eine solche Klassifizierung kann sich insbesondere dann als einfach und zuverlässig erweisen, wenn in dem Überwachungsbereich Gegenstände einer vorgegebenen festen Form auftreten, die für die Zwecke der Überwachung die Gegenstände eindeutig kennzeichnet. Eine Klassifizierung in Abhängigkeit von der Form erscheint insbesondere bei zu bearbeitenden Werkstück besonders vorteilhaft.

Zur Klassifizierung können auch Kombinationen der zuvor aufgeführten Kriterien sowie weiterer Kriterien verwendet werden.

Insbesondere für die Zwecke der Überwachung eines Bereichs vor einer Maschine ist es bevorzugt, dass wenigstens eine Klasse für Fusionsobjekte und/oder Fusionsobjektgruppierungen für sicherheitskritische Fusionsobjekte bzw. Fusionsobjektgruppierungen und wenigstens eine Klasse für Fusionsobjekte und/oder Fusionsobjektgruppierungen für neutrale Fusionsobjekte bzw. Fusionsobjektgruppierungen verwendet werden. Sicherheitskritische Fusionsobjekte oder Fusionsobjektgruppierungen können insbesondere vorliegen, wenn diese Lebewesen, insbesondere Menschen, oder besonders wertvollen Gegenständen oder Einrichtungen, die keinesfalls beschädigt werden dürfen, entsprechen. Neutrale Fusionsobjekte oder Fusionsobjektgruppierungen können insbesondere Gegenständen entsprechen, die, beispielsweise zur Bearbeitung, gefahrlos in den Bereich der Vorrichtung mit dem beweglichen Teil, insbesondere einer Maschine, geführt und ggf. dort bearbeitet werden können. Durch diese Klassifizierung ist es möglich, zunächst festzustellen, ob ein gegebenes Fusionsobjekt oder eine gegebene Fusionsobjektgruppierung als sicherheitskritisch oder als neutral einzustufen ist, und in Abhängigkeit von dieser Klassifikation zu ermitteln, ob eine Gefährdung vorliegt oder nicht.

Zur Erkennung von Gefährdungen ist es bevorzugt, dass wenigstens einem beweglichen Fusionsobjekt und/oder einer beweglichen Fusionsobjektgruppierung ein Schutzbereich zugewiesen wird, und dass geprüft wird, ob ein anderes Fusionsobjekt und/oder eine andere Fusionsobjektgruppierung in den Schutzbereich eintritt. In diesem Fall kann ein entsprechendes Überwachungssignal gebildet ausgegeben werden. Der Schutzbereich kann dabei insbesondere mit dem Fusionsobjekt und/oder der Fusionsobjektgruppierung mitbewegt werden. Damit geht man von dem sonst üblichen Konzept einer stationären Schutzzone nahe einer Vorrichtung mit einem angetriebenen beweglichen Teil, insbesondere einer Fertigungsmaschine, ab. Vielmehr wird, insbesondere bei der Verwendung von Klassen für sicherheitskritische Fusionsobjekte und/oder Fusionsobjektgruppierungen und neutrale Fusionsobjekte und/oder Fusionsobjektgruppierungen, eine differenzierte Analyse des Szene vor der Vorrichtung ermöglicht, so dass eine Gefährdung beispielsweise nicht schon erkannt wird, wenn nur ein Werkstück in den Überschneidungsbereich und in große Nähe zu dem beweglichen Teil der Vorrichtung bzw. Maschine gebracht wird, um dort bearbeitet zu werden. Vielmehr braucht beispielsweise ein entsprechendes Überwachungssignal nur ausgelöst zu werden, wenn sich ein Körperteil einer Bearbeitungsperson in den Bereich der Vorrichtung bzw. des angetriebenen beweglichen Teil derselben bewegt.

Um die Größe und Form des Schutzbereichs festlegen zu können, ist es besonders bevorzugt, dass wenigstens einem Fusionsobjekt und/oder einer Fusionsobjektgruppierung eine Klasse zugewiesen wird, und dass dem Fusionsobjekt bzw. der Fusionsobjektgruppierung wenigstens in Abhängigkeit von der zugewiesenen Klasse ein Schutzbereich zugewiesen wird. Die Zuweisung des Schutzbereichs kann dabei allein in Abhängigkeit von der Klasse, aber auch in Abhängigkeit von weiteren Parametern erfolgen. Der Schutzbereich für ein Fusionsobjekt oder eine Fusionsobjektgruppierung kann sich dabei insbesondere in seiner Form nach der Form des entsprechenden Fusionsobjekts bzw. der entsprechenden Fusionsobjektgruppierung richten.

Weiterhin ist es bevorzugt, dass einem Fusionsobjekt und/oder einer Fusionsobjektgruppierung wenigstens in Abhängigkeit von dessen bzw. deren Lage und/oder Bewegung, insbesondere Bewegungsrichtung und/oder Bewegungsgeschwindigkeit, ein Schutzbereich zugewiesen wird. Die Größe des Schutzbereichs für eine Hand einer Bedienperson bzw. ein entsprechendes Fusionsobjekt kann beispielsweise größer gewählt werden, wenn sich die Hand in Richtung auf die Vorrichtung zu bewegt und gleichzeitig der Vorrichtung sehr nahe ist, als bei einer Bewegung in der umgekehrten Richtung oder in einer größeren Entfernung von der Vorrichtung. Ob ein Fusionsobjekt der Vorrichtung sehr nahe ist, kann beispielsweise dadurch ermittelt werden, dass es bei einer maximalen angenommenen Bewegungsgeschwindigkeit innerhalb eines vorgegebenen Zeitintervalls, das beispielsweise der Zeit entsprechen kann, in der die Bewegung des beweglichen Teils der Vorrichtung unterbrochen werden kann, in den Bereich der Vorrichtung und insbesondere die Bewegungsbahn des angetriebenen beweglichen Teils der Vorrichtung gelangen könnte.

Darüber hinaus ist es bevorzugt, dass die Ausdehnung des Schutzbereichs eines Fusionsobjekts und/oder einer Fusionsobjektgruppierung in Abhängigkeit von wenigstens einer Eigenschaft wenigstens eines anderen Fusionsobjekts und/oder einer anderen Fusionsobjektgruppierung ermittelt wird.

Vorzugsweise werden Kombinationen der oben genannten Kriterien verwendet, um Form und/oder Größe des Schutzbereichs festzulegen.

Sind für Fusions- und/oder Fusionsobjektgruppierungen Schutzbereiche festgelegt, ist es bevorzugt, dass eine Bewegung wenigstens eines Fusionsobjekts und/oder einer Fusionsobjektgruppierung zu wenigstens einem zukünftigen Zeitpunkt vorhergesagt wird, dass geprüft wird, ob zu und/oder bis zu dem Zeitpunkt ein Fusionsobjekt und/oder eine Fusionsgruppierung in den Schutzbereich oder das Fusionsobjekt bzw. die Fusionsobjektgruppierung in den Schutzbereich eines anderen Fusionsobjekts und/oder einer anderen Fusionsobjektgruppierung eintritt, und dass bei Feststellung eines Eintritts ein entsprechendes Überwachungssignal abgegeben wird. Auf diese Weise kann eine Antizipation von Gefahrsituationen erfolgen, so dass beispielsweise die Vorrichtung bzw. deren bewegliches Teil nicht unbedingt angehalten zu werden braucht, sondern ggf. auch eine Verlangsamung der Bewegung als Schutzmaßnahme ausreicht. Alternativ kann frühzeitig durch das Überwachungssignal ein Warnsignal einer entsprechenden Warnvorrichtung ausgelöst werden. Die Vorhersage kann unter Verwendung der Ergebnisse der Objektverfolgung, bei der insbesondere Geschwindigkeiten der Objekte vorhergesagt werden können, erfolgen. Es können jedoch auch nur Daten über die Bewegung von Fusionsobjekten und/oder Fusionsobjektgruppierungen aus vorhergehenden Zyklen verwendet werden, um deren Lage und/ oder Bewegung für den nächsten Zyklus oder auch mehrere Zyklen beispielsweise durch Extrapolation vorherzusagen. Der Zeitpunkt wird vorzugsweise in Bezug auf den Zeitpunkt der Erfassung des aktuellen Bildes so gewählt, dass in diesem Zeitraum nach Abgabe eines entsprechenden Überwachungssignals noch Maßnahmen ergriffen werden können, um die Gefährdung abwenden zu können.

Weiterhin ist es bevorzugt, dass geprüft wird, ob ein vorgegebener Abschnitt des Überschneidungsbereichs, insbesondere ein Gefahrbereich, in wenigstens einem der Videobilder verdeckt ist. Bei Erkennung einer Verdeckung kann insbesondere ein Überwachungssignal abgegeben werden, das zu einem Stopp der Vorrichtung bzw. der Bewegung des beweglichen Teils der Vorrichtung oder eine Geschwindigkeitsreduktion der Bewegung des beweglichen Teils der Vorrichtung führt. Eine solche Verdeckungserkennung ist einfach möglich, da bei den erfindungsgemäßen Verfahren räumliche Daten in Bezug auf die Lage und Ausdehnung von Fusions- und/oder Fusionsobjektgruppierungen relativ zueinander und zu der Vorrichtung vorliegen. Sie erlaubt so eine Verbesserung der Sicherheit der Überwachung.

Beim Betrieb einer Vorrichtung über einen längeren Zeitraum können sich die Umgebungsbedingungen, beispielsweise die Beleuchtungsbedingungen, im Überwachungsbereich und insbesondere auch im Überschneidungsbereich der Sichtfelder der Videokameras, oder Eigenschaften der Videokameras, beispielsweise durch Verschmutzung, ändern. Dies kann dazu führen, dass die Erkennung und/oder Verfolgung von Objekten beeinträchtigt wird. Es ist daher bevorzugt, dass auf wenigstens einem Objekt, das einem Gegenstand eines vorgegebenen Typs entspricht, wenigstens eine vorgegebene Markierung erkannt wird, die charakteristisch für den Typ von Gegenstand ist, dass dem Objekt entsprechende Teile wenigstens eines Videobildes mit Referenzdaten verglichen werden, die für den Typ von Gegenstand vorgegeben sind, und dass in Abhängigkeit von dem Ergebnis des Vergleichs Veränderungen der Bedingungen in wenigstens einem Teil des Überwachungsbereichs, insbesondere Beleuchtungsbedingungen, und/oder eine Beeinträchtigung einer zur Erfassung des entsprechenden Videobildes verwendeten Videokamera erkannt werden. Vorzugsweise werden in Abhängigkeit von dem Ergebnis des Vergleichs bzw. den erkannten Veränderungen Korrekturen in den Videobildern vor deren Verarbeitung vorgenommen oder Verfahren zur Auswertung der Videobilder entsprechend angepasst.

Die Referenzdaten können dabei fest vorgegeben sein. Sie können jedoch auch laufend aktualisiert werden, was sich insbesondere bei einer kontinuierlich betriebenen Vorrichtung bzw. Maschine anbietet. Die Referenzdaten können vorzugsweise einer Objektklasse zugeordnet sein, die dem Objekt zugeordnet ist.

Prinzipiell genügt es, bei dem erfindungsgemäßen Verfahren Videobildfolgen von nur zwei Videokameras zu verwenden. Um Verdeckungen in dem Überschneidungsbereich möglichst weitgehend ausschließen zu können, werden vorzugsweise Videobildfolgen von wenigstens drei Videobildkameras verwendet, deren Sichtfelder sich in dem Überschneidungsbereich in dem Überwachungsbereich überschneiden. Auf der Basis jeder der Videobildfolgen wird dann jeweils eine Objekterkennung und/oder -verfolgung durchgeführt. Die Ergebnisse der entsprechenden wenigstens drei Objekterkennungen und/ oder -verfolgungen können dann insbesondere zur Bildung von entsprechenden Fusionsobjekten verwendet werden, die aufgrund der größeren Anzahl der zu ihrer Bildung verwendeten Objekte auch besser definierbar sind.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird dabei auch jede Datenverarbeitungseinrichtung verstanden, die insbesondere mindestens einen Prozessor, mindestens einen Speicher und Schnittstellen zur Zuführung bzw. zur Abgabe von Daten aufweist. Insbesondere kann der Computer einen digitalen Signalprozessor aufweisen.

Vorzugsweise ist der Computer bzw. gegebenenfalls ein Computernetzwerk zweikanalig ausgeführt, so dass zwischen den Kanälen Daten zur gegenseitigen Überprüfung der Funktionsfähigkeit und Fehlerfreiheit austauschbar und überprüfbar sind.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einen Computer ausgeführt wird. Bei dem Datenträger kann es sich insbesondere um nichtflüchtige Speicher in Form von entsprechenden Halbleiterbauelementen, CDs, DVDs oder auch Disketten handeln.

Darüber hinaus ist Gegenstand der vorliegenden Erfindung eine Vorrichtung zur Überwachung eines Überwachungsbereichs neben und/oder in einer Vorrichtung mit wenigstens einem angetriebenen, beweglichen Teil mit wenigstens zwei Videokameras, mittels derer Videobilder zweier verschiedener Sichtfelder erfassbar sind, die sich in einem Überschneidungsbereich in dem Überwachungsbereich wenigstens teilweise überschneiden, und einer mit den Videokameras verbundenen Datenverarbeitungsvorrichtung, die zur Durchführung des erfindungsgemäßen Verfahrens ausgebildet ist. Die Datenverarbeitungsvorrichtung kann dabei insbesondere mit einem erfindungsgemäßen Computerprogramm programmiert sein.

Um eine möglichst vollständige Erfassung des Überwachungsbereichs zu ermöglichen und Verdeckungen von Teilen des Überwachungsbereichs möglichst weitgehend vermeiden zu können, ist es bevorzugt, dass wenigstens drei Videokameras verwendet werden, deren Sichtfelder voneinander verschieden sind und sich in dem Überwachungsbereich überschneiden.

Die Erfindung wird im Folgenden noch weiter anhand der Zeichnungen erläutert. Es zeigen:
- Fig. 1: eine schematische Draufsicht auf einen Arbeitsplatz mit einer Gesenkbiegepresse, zwei Fördervorrichtungen, einer Bedienperson und einer Vorrichtung zur Überwachung eines Überwachungsbereichs neben und in der Gesenkbiegepresse nach einer bevorzugten Ausführungsform der Erfindung, und
- Fig. 2: eine schematische Seitenansicht des Arbeitsplatzes in Fig. 1.

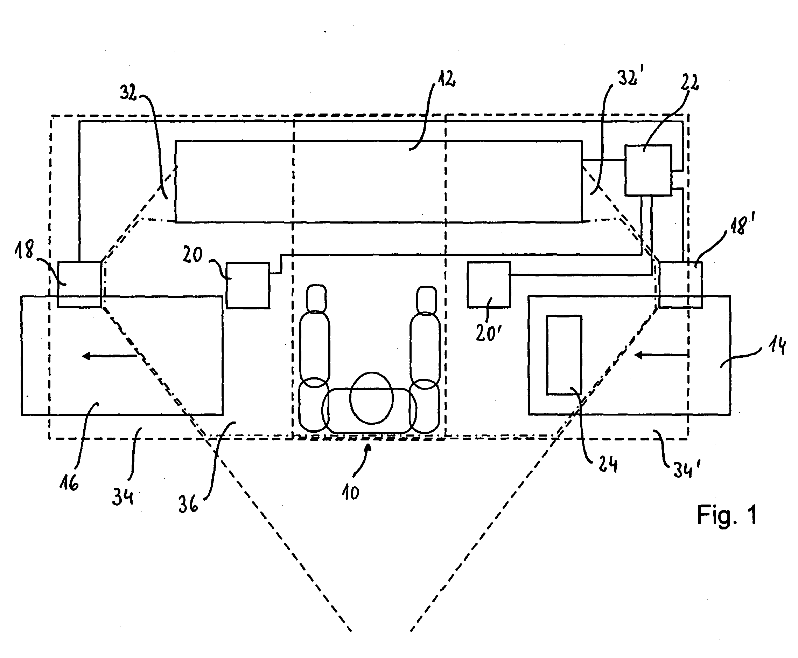

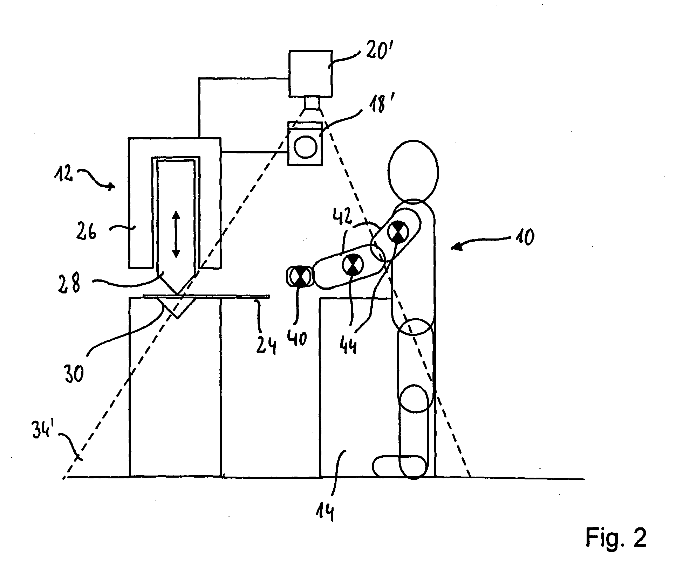

In den Fig. 1 und 2 sind an einem Arbeitsplatz für eine Bedienperson 10 eine Gesenkbiegepresse 12 als Vorrichtung mit einem angetriebenen beweglichen Teil, zwei Fördereinrichtungen 14 und 16 und eine Vorrichtung zur Überwachung eines Überwachungsbereichs neben und in der Gesenkbiegepresse 12 mit vier Videokameras 18, 18' und 20, 20' sowie einer mit den Videokameras 18, 18' und 20, 20' verbundenen Datenverarbeitungseinrichtung 22, die zur Abgabe von Überwachungssignalen an die Gesenkbiegepresse 12 bzw. eine Steuerung derselben mit der Gesenkbiegepresse 12 bzw. der Steuerung dieser verbunden ist, angeordnet.

Auf der Fördervorrichtung 14, einem Förderband, können Werkstücke 24, im Beispiel mit der Gesenkbiegepresse 12 zu biegende Bleche einer vorgegebenen Form, dem Arbeitsplatz zugeführt werden, wo sie von der Bedienperson 10 der Fördervorrichtung 14 entnommen, an der Gesenkbiegepresse 12 bearbeitet und nach Bearbeitung zum Weitertransport an eine weitere Bearbeitungsstation auf die ebenfalls durch ein Förderband gegebene Fördervorrichtung 16 gelegt werden können.

Die Gesenkbiegepresse 12 umfasst, in Fig. 2 nur grob schematisch gezeigt, in einem Träger 26 einen Biegestempel 28, der über einen in den Figuren nicht gezeigten, mittels eines Steuermoduls steuerbaren Antrieb auf und ab bewegbar ist, sowie ein Biegegesenk 30, das im Beispiel eine rechtwinklige V-Nut umfasst.

Zur Bearbeitung eines Werkstücks 24 wird dieses in die Gesenkbiegepresse 12 zwischen den Biegestempel 28 und das Biegegesenk 30 gelegt, woraufhin es durch Bewegung des Biegestempels 28 auf das Biegegesenk 30 zu in eine vorgegebene Form gebogen wird.

Zur Überwachung des Bereichs vor bzw. neben der Gesenkbiegepresse 12 sind die beiden seitlich des Arbeitsplatzes angeordneten Farb-Videokameras 18, 18' und die beiden oberhalb des Arbeitsplatzes angeordneten Farb-Videokameras 20, 20' vorgesehen, deren durch gestrichelte Linien gekennzeichneten Sichtfelder 32, 32' bzw. 34, 34' sich, wegen möglicher Verdeckungen durch die Gesenkbiegepresse 12 und die Fördervorrichtungen 14 und 16, in dem einen Überwachungsbereich darstellenden Überschneidungsbereich 36 überschneiden, der in Fig. 1 durch strichpunktierte Linien grob schematisch gekennzeichnet ist.

Die Positionen der Videokameras 18, 18' und 20, 20' relativ zueinander und zu der Gesenkbiegepresse 12 sind fest vorgegeben und bekannt. Darüber hinaus sind die Abbildungseigenschaften der optischen Systeme der Videokameras 18, 18' und 20, 20' bekannt, so dass aus einem Punkt in dem Überschneidungsbereich 36 entsprechenden Videobildpunkten von im Wesentlichen synchron erfassten Videobildern der Videokameras 18, 18' und 20, 20' die Lage dieses Punkts ermittelbar ist.

Von den Videokameras 18, 18' und 20, 20' in zeitlicher Folge im Wesentlichen synchron erfasste Videobilder bzw. Videobildfolgen werden getrennt der Datenverarbeitungsvorrichtung 22 zugeführt, wo sie zur Durchführung eines Verfahrens zur Überwachung des Überwachungsbereichs 36 nach einer bevorzugten Ausführungsform der Erfindung verarbeitet werden. Die Datenverarbeitungseinrichtung 22 umfasst dazu Schnittstellen zur Erfassung der Videobilder und zur Ausgabe von Überwachungssignalen an das Steuermodul der Gesenkbiegepresse 12, einen mit den Schnittstellen verbundenen Prozessor und mit dem Prozessor verbundene Speichereinrichtungen, in denen u.a. ein Computerprogramm nach einer bevorzugten Ausführungsform der Erfindung gespeichert ist und mit dem der Prozessor zur Durchführung des Verfahrens programmiert ist.

Bei einer anderen Ausführungsform kann die Datenverarbeitungsvorrichtung auch in die Videokameras integriert sein, wobei diese miteinander zum Austausch der Daten vernetzt sind.

Die Videokameras 18, 18' und 20, 20' bilden zusammen mit der Datenverarbeitungsvorrichtung 22 eine Vorrichtung zur Überwachung eines Überwachungsbereichs nach einer bevorzugten Ausführungsform der Erfindung.

Die Bedienperson 10 trägt Arbeitshandschuhe 38 mit Markierungen 40 sowie Arbeitskleidung 42 mit Markierungen 44.

Im Folgenden wird das Verfahren zur Überwachung des Überwachungsbereichs 36 nach einer bevorzugten Ausführungsform der Erfindung genauer beschrieben.

Bei einem Betrieb der Gesenkbiegepresse 12 werden in zeitlicher Folge im Wesentlichen synchron von den Videokameras 18, 18' und 20, 20' Videobilder ihres jeweiligen Sichtfeldes 32, 32' bzw. 34, 34' erfasst und an die Datenverarbeitungsvorrichtung 22 gesendet, in der die vier Videobildfolgen dann zunächst getrennt voneinander weiterverarbeitet werden.

Für jeden Satz im Wesentlichen synchron erfasster, aktueller Videobilder, im Beispiel jedes Paar von Videobildern, wird ein Zyklus des Verfahrens durchgeführt.

Auf der Basis der Folgen von Videobildern der Videokameras 18, 18' und 20, 20' werden getrennt voneinander Objekterkennungs- und -verfolgungsverfahren durchgeführt. Für jede der Folgen wird dabei das gleiche Verfahren verwendet. Aus diesem Grund können sich die Erläuterungen zu den Objekterkennungs- und -verfolgungsverfahren auf das Objekterkennungs- und -verfolgungsverfahren für die Videobilder der Videokamera 18 beschränken.

In jedem Zyklus werden in dem jeweils aktuellen Videobild Objekte gebildet und klassifiziert. Dazu wird das Videobild anhand der Farbe und Textur von Bildbereichen segmentiert, wobei als Segmente zusammenhängende Bereiche in dem Videobild gebildet werden, die Oberflächenbereichen auf entsprechenden Gegenständen entsprechen, die in Bezug auf die Farbe und Textur ähnliche Eigenschaften aufweisen. Jeweils ein zusammenhängender Bereich entspricht dabei einem Objekt. Allen Objekten werden Lagedaten zugeordnet, die deren Lage in dem Videobild wiedergeben. Die Lagedaten können beispielsweise durch den geometrischen Schwerpunkt der zusammenhängenden Bereiche gegeben sein.

Daraufhin werden die gebildeten Objekte klassifiziert. Dazu werden unterschiedliche Kriterien verwendet.

So sind in den Videobildern Abschnitte vordefiniert, die dem Teil des Überschneidungsbereichs 36 auf der Fördervorrichtung 14 entsprechen. Objekte, die erstmals in diesen Abschnitten auftreten, werden als Werkstücke klassifiziert, da davon ausgegangen wird, dass auf der Fördervorrichtung 14 nur Werkstücke auftreten können.

Zusammenhängende Bereiche in dem Videobild, die ein den Markierungen 40 und 44 entsprechendes Muster umschließen, werden in Abhängigkeit von der Farbe als Arbeitshandschuhe 38 oder als Arbeitskleidung 42 einer Bedienperson erkannt und zusammen als Objekte der Klasse Personenbekleidung klassifiziert.

Nach der Klassifizierung werden zur Bestimmung der Lage von Gegenständen bzw. Gegenstandsbereichen entsprechende Objekte in den Videobildern einander zugeordnet und entsprechende Fusionsobjekte gebildet, deren Lage, Form und Ausdehnung in Abhängigkeit von den Objektklassen der den Fusionsobjekten zugrunde liegende Objekte und den in den Videobildern erkannten Größen der Objekte erkannt werden.

Jedem Fusionsobjekt wird dabei in Abhängigkeit von den Klassen der dieses bildenden Objekte eine Fusionsobjektklasse zugeordnet, die weiterhin einen für die Objektklasse typischen Referenzkörper umfasst, der in vereinfachter Weise die Form des Fusionsobjekts im Raum wiedergibt. Aus den jeweiligen Daten in Bezug auf die Lage in den Videobildern unter Berücksichtigung der Lagen und Abbildungseigenschaften der Videokameras 18, 18', 20 und 20' werden weiterhin Lagen der Fusionsobjekte im Raum ermittelt.

So ermittelte Fusionsobjekte werden dann, soweit möglich, aus dem vorhergehenden Zyklus bekannten Fusionsobjekten zugeordnet, wobei deren Lagen, Bewegungsgeschwindigkeiten und Bewegungsrichtungen aktualisiert werden. Die Bewegungsgeschwindigkeiten und Bewegungsrichtungen ergeben sich dabei aus den Differenzen der Lagen in dem aktuellen Zyklus und dem vorhergehenden Zyklus und der Zeitspanne zwischen diesen Zyklen.

Soweit möglich, wird dann aus den Fusionsobjekten eine Fusionsobjektgruppierung gebildet, die Fusionsobjekte umfasst, deren Bewegungen gekoppelt sind. Die Bildung erfolgt, wenn die Fusionsobjekte einen vorgegebenen Höchstabstand voneinander unterschreiten bzw. sich berühren und entweder den Fusionsobjekten vorgegebene Fusionsobjektklassen zugewiesen sind oder die Fusionsobjekte Markierungen von der Art der Markierungen 40 und 44 aufweisen.

Im Beispiel wird das dem Arbeitshandschuh 38 entsprechende Fusionsobjekt und das der Arbeitskleidung 42 bzw. dem Ärmel derselben entsprechende Fusionsobjekt zu einer Fusionsobjektgruppierung "Arm" zusammengefasst, das den gesamten Arm der Bedienperson darstellen soll.

Jedem neuen Fusionsobjekt, das nicht Teil einer Fusionsobjektgruppierung ist, und jeder neuen Fusionsobjektgruppierung wird dann eine Klasse für Fusionsobjekte bzw. Fusionsobjektgruppierungen zugewiesen. Dazu sind drei Fusionsobjektklassen vorgesehen, nämlich solche für sicherheitskritische Gegenstände, die unter allen Umständen zu schützen sind. Hierunter fallen insbesondere Personen. Weiterhin ist Klasse für Fusionsobjekte und/oder Fusionsobjektgruppierungen für neutrale Gegenstände vorgesehen, die nicht zu schützen sind und beispielsweise insbesondere mit dem Biegestempel 28 als potentiell gefährlichem Teil der Gesenkbiegepresse 12 in Kontakt kommen dürfen. Ein Beispiel hierfür ist das Werkstück 24.

Schließlich kann eine Klasse für Fusionsobjekte und eine Klasse für Fusionsobjektgruppierungen vorgesehen werden, in die Gegenstände fallen, die nicht mit anderen Objekten kollidieren sollten.

Fusionsobjekten, insbesondere solchen, die zu schützenden Gegenständen entsprechen, werden weiterhin Schutzbereiche bzw. -felder zugeordnet. Dies geschieht in Abhängigkeit von wenigstens einem oder mehreren Faktoren.

Im vorliegenden Beispiel werden Schutzbereiche Paaren von Fusionsobjekten und/oder Fusionsobjektgruppierungen zugeordnet, die entweder zwei Fusionsobjekte, zwei Fusionsobjektgruppierungen oder ein Fusionsobjekt und eine Fusionsobjektgruppierung umfassen. Der Schutzbereich wird dabei einem Fusionsobjekt bzw. einer Fusionsobjektgruppierung des Paars zugeordnet, wobei eine Verletzung des Schutzbereichs durch das andere Fusionsobjekt oder die andere Fusionsobjektgruppierung des Paares überprüft wird.

Der Fusionsobjektgruppierung "Arm" bzw. den dieses konstituierenden Fusionsobjekten ist jeweils in Bezug auf den Biegestempel 28 bzw. ein entsprechendes Fusionsobjekt ein Schutzbereich zugeordnet, der in seiner Form der Form der Fusionsobjektgruppierung entspricht, wobei die Ausdehnung durch die maximal zu erwartende Geschwindigkeit der Bewegung der Fusionsobjektgruppierung und die Zeit gegeben ist, die erforderlich ist, um die Bewegung des Biegestempels 28 zu stoppen.

Beispielsweise wird einem Fusionsobjekt wie der Hand als zu schützendes Fusionsobjekt in Verbindung mit dem Biegestempel 28 als neutralem Fusionsobjekt ein Schutzbereich zugewiesen, dessen Größe davon abhängt, wie schnell sich das Fusionsobjekt, d.h. im Beispiel die Hand, bewegen kann und welche Zeit bzw. welcher Weg notwendig ist, um die Bewegung des Biegestempels 28 zu stoppen.

Einem Paar aus einem Werkstück 24 und einer Hand ist dagegen kein Schutzbereich bzw. ein Schutzbereich mit Ausdehnung Null zugeordnet, da die Hand das Werkstück zur Bearbeitung berühren können muss.

Tritt nun ein Fusionsobjekt oder eine Fusionsobjektgruppierung in einen Schutzbereich eines anderen Fusionsobjekts oder einer Fusionsobjektgruppierung ein, so wird ein Überwachungssignal an das Steuermodul der Gesenkbiegepresse 12 abgegeben, auf das hin die Bewegung des Biegestempels 28 gestoppt wird. Beispielsweise kann eine Hand, die ein zu biegendes Blech hält, durch eine Bewegung des Blechs beim Biegen zwischen dem Pressbalken der Biegepresse und dem Blech eingeklemmt werden, wenn der entsprechende Abschnitt des Blechs durch den Biegevorgang auf den Pressbalken zu bewegt wird. Diese Situation kann mit dem beschriebenen Verfahren leicht erkannt werden.

Weiterhin wird die Bewegung des das Werkstück 24 darstellenden Fusionsobjekts und der den "Arm" darstellenden Fusionsobjektgruppierung in Abhängigkeit von entsprechenden Lagen in vorhergehenden Zyklen für weitere Zyklen, beispielsweise vier Zyklen, vorhergesagt und am Ende des Vorhersagezeitraums geprüft, ob eine Schutzbereichsverletzung vorliegt.

Ist dies der Fall, wird ein entsprechendes Überwachungssignal an die Gesenkbiegepresse 12 ausgegeben, die daraufhin zunächst nur die Geschwindigkeit reduziert, mit der der Biegestempel 28 in Richtung auf das Biegegesenk 30 zu bewegt wird.

Darüber hinaus wird laufend überprüft, ob in dem Überwachungsbereich 36 Teile verdeckt sind. Ist dies der Fall, wird ein entsprechendes Überwachungssignal an die Gesenkbiegepresse 12 ausgegeben, die daraufhin die Bewegung des Biegestempels 28 stoppt.

Schließlich wird laufend überprüft, ob die den Markierungen 40 und 44 entsprechenden Videobildbereiche entsprechenden Referenzdaten für die Markierungen entsprechen. Ist dies nicht der Fall, wird von einer Änderung der Beleuchtungsbedingungen ausgegangen und die erfassten Videobilder und/oder Auswertealgorithmen werden, wenn möglich, entsprechend korrigiert. Andernfalls wird ein Warnsignal ausgegeben.

Das Überwachungsverfahren erlaubt daher eine differenzierte Reaktion auf verschiedene Gefährdungssituationen für die Bedienperson 12, wobei gleichzeitig eine Echtzeitverarbeitung der Videobilder ermöglicht wird.

### Bezugszeichenliste

- 10: Bedienperson
- 12: Gesenkbiegepresse
- 14: Fördervorrichtung
- 16: Fördervorrichtung
- 18, 18': Videokameras
- 20, 20': Videokameras
- 22: Datenverarbeitungsvorrichtung
- 24: Werkstück
- 26: Träger
- 28: Biegestempel
- 30: Biegegesenk
- 32, 32': Sichtfelder
- 34, 34': Sichtfelder
- 36: Überschneidungs- bzw. Überwachungsbereich
- 38: Arbeitshandschuh
- 40: Marke
- 42: Arbeitskleidung
- 44: Marken

## Patentansprüche

1. Verfahren zur Überwachung eines Überwachungsbereichs (36) neben und/oder in einer Vorrichtung (12) mit wenigstens einem angetriebenen, beweglichen Teil (28) bei dem
Videobilder verwendet werden, die in zeitlicher Folge von wenigstens zwei Videokameras (18, 18', 20, 20') erfasst wurden, deren Sichtfelder (32, 32', 34, 34') sich wenigstens teilweise in einem Überschneidungsbereich (36) in dem Überwachungsbereich (36) überschneiden,
auf der Basis der von einer ersten der Videokameras (18, 18', 20, 20') erfassten ersten Videobilder eine erste und auf der Basis der von einer zweiten der Videokameras (18, 18', 20, 20') erfassten zweiten Videobilder eine zweite Erkennung und/oder Verfolgung von Objekten, die Gegenständen (24, 28, 38, 42) wenigstens in dem Überschneidungsbereich entsprechen, durchgeführt wird,
zur Klassifizierung und/oder Bestimmung der Lage und/oder Bewegung wenigstens eines Gegenstandes (24, 28, 38, 42) in dem Überschneidungsbereich (36), dem Gegenstand (24, 28, 38, 42) entsprechende Objekte der ersten und der zweiten Objekterkennung und/oder -verfolgung ermittelt und für beide Objekte bei deren Objekterkennung und/oder -verfolgung jeweils ermittelte Daten ausgewertet werden, und
in Abhängigkeit von der Auswertung wenigstens ein Überwachungssignal gebildet wird,
**dadurch gekennzeichnet,**
**dass** zur Definition von Objekten in den Videobildern zusammenhängende Bereiche ermittelt werden, die Oberflächenbereichen auf einem einem Objekt entsprechenden Gegenstand (24, 28, 38, 42) entsprechen, die gemäß wenigstens einem vorgegebenen Kriterium ähnliche Oberflächeneigenschaften aufweisen.

2. Verfahren nach Anspruch 1,
**dadurch gekennzeichnet,**
**dass** zur Definition der Objekte in den Videobildern zusammenhängende Bereiche ermittelt werden, die gemäß wenigstens einem vorgegebenen Kriterium ähnliche Grauwerte und/oder Farben und/oder Texturen aufweisen.

3. Verfahren nach Anspruch 1 oder 2,
**dadurch gekennzeichnet,**
**dass** den Objekten wenigstens eine Objektklasse zugewiesen wird.

4. Verfahren nach einem der vorhergehenden Ansprüche,
**dadurch gekennzeichnet,**
**dass** auf Objekten vorgegebene Merkmale (40, 44) erkannt werden, und
**dass** den Objekten in Abhängigkeit von den erkannten, vorgegebenen Merkmalen (40, 44) wenigstens eine Objektklasse zugeordnet wird.

5. Verfahren nach einem der vorhergehenden Ansprüche,
**dadurch gekennzeichnet,**
**dass** bei der Objekterkennung und/oder -verfolgung nur bewegliche Objekte erkannt bzw. verfolgt werden.

6. Verfahren nach Anspruch 5,
**dadurch gekennzeichnet,**
**dass** zur Ermittlung wenigstens eines beweglichen Objekts aus den verwendeten Videobildern ein sich im Laufe der Zeit nicht bewegender und/oder verändernder Hintergrund eliminiert wird.

7. Verfahren nach einem der vorhergehenden Ansprüche,
**dadurch gekennzeichnet,**
**dass** demselben Gegenstand (24, 28, 38, 42) entsprechenden Objekten der ersten und zweiten Objekterkennung und/oder -verfolgung ein Fusionsobjekt zugeordnet wird, dessen Lage und/oder Bewegung und/oder Eigenschaften in Abhängigkeit von Daten in Bezug auf die Lagen und/oder Bewegungen und/oder Eigenschaften der dem Gegenstand (24, 28, 38, 42) entsprechenden Objekte ermittelt werden.

8. Verfahren nach Anspruch 7,
**dadurch gekennzeichnet,**
**dass** nach Bildung eines Fusionsobjekts in einem Zyklus dessen Daten in Bezug auf dessen Lage und/oder Bewegung und/oder Eigenschaften in Abhängigkeiten von den Daten der dem Gegenstand (24, 28, 38, 42) entsprechenden Objekte in Bezug auf deren Lagen und/oder Bewegungen und/oder Eigenschaften in wenigstens einem folgenden Zyklus aktualisiert werden.

9. Verfahren nach Anspruch 7 oder 8,
**dadurch gekennzeichnet,**
**dass** in dem Fall, dass bei der Objektverfolgung eines einem Fusionsobjekt zugeordneten Objekts dieses in einem aktuellen Videobild nicht erkannt wird, zur Ermittlung von Daten in Bezug auf die Lage und/oder Bewegung und/oder Eigenschaften des Fusionsobjekts nur die Daten eines anderen, dem Fusionsobjekt zugeordneten Objekts in Bezug auf dessen Lage und/oder Bewegung und/oder Eigenschaften verwendet werden.

10. Verfahren nach einem der vorhergehenden Ansprüche,
**dadurch gekennzeichnet,**
**dass** aus wenigstens zwei Objekten oder Fusionsobjekten, deren Bewegung gekoppelt ist, eine Objekt- bzw. Fusionsobjektgruppierung gebildet wird.

11. Verfahren nach einem der Ansprüche 7 bis 10,
**dadurch gekennzeichnet,**
**dass** wenigstens einem Fusionsobjekt und/oder einer Objekt- bzw. Fusionsobjektgruppierung eine Fusionsobjektklasse bzw. eine Klasse für Objekt- bzw. Fusionsobjektgruppierungen zugeordnet wird.

12. Verfahren nach Anspruch 11,
**dadurch gekennzeichnet,**
**dass** auf Objekten vorgegebene Merkmale erkannt werden, und
**dass** den Fusionsobjekten und/oder Objekt- bzw. Fusionsobjektgruppierungen in Abhängigkeit von den erkannten, vorgegebenen Merkmalen (40, 44) auf den Fusionsobjekten bzw. Objekt- bzw. Fusionsobjektgruppierungen zugeordneten Objekten wenigstens eine Fusionsobjektklasse bzw. Klasse für Objekt- bzw. Fusionsobjektgruppierungen zugeordnet wird.

13. Verfahren nach einem der vorhergehenden Ansprüche,
**dadurch gekennzeichnet,**
**dass** einem Objekt und/oder einem Fusionsobjekt und/oder einer Objekt- bzw. Fusionsobjektgruppierung eine Klasse für Objekte bzw. Fusionsobjekte bzw. Objekt- bzw. Fusionsobjektgruppierungen in Abhängigkeit davon zugeordnet wird, ob wenigstens ein Abschnitt des Objekts bzw. des Fusionsobjekts bzw. der Objekt- bzw. Fusionsobjektgruppierung in einen vorgegebenen Abschnitt des Überwachungsbereichs (36) bewegt wird.

14. Verfahren nach Anspruch 13,
**dadurch gekennzeichnet**,
wenigstens eine Klasse für Fusionsobjekte und/oder Fusionsobjektgruppierungen für sicherheitskritische Fusionsobjekte bzw. Fusionsobjektgruppierungen und wenigstens eine Klasse für Fusionsobjekte und/oder Fusionsobjektgruppierungen für neutrale Fusionsobjekte bzw. Fusionsobjektgruppierungen verwendet werden.

15. Verfahren nach einem der Ansprüche 7 bis 14,
**dadurch gekennzeichnet**,
wenigstens einem beweglichen Fusionsobjekt und/oder einer beweglichen Fusionsobjektgruppierung ein Schutzbereich zugewiesen wird, und dass geprüft wird, ob ein anderes Fusionsobjekt und/oder eine andere Fusionsobjektgruppierung in den Schutzbereich eintritt.

16. Verfahren nach Anspruch 15,
**dadurch gekennzeichnet,**
**dass** wenigstens einem Fusionsobjekt und/oder einer Fusionsobjektgruppierung eine Klasse zugewiesen wird, und
**dass** dem Fusionsobjekt bzw. der Fusionsobjektgruppierung wenigstens in Abhängigkeit von der zugewiesenen Klasse ein Schutzbereich zugewiesen wird.

17. Verfahren nach Anspruch 15 oder 16,
**dadurch gekennzeichnet,**
**dass** einem Fusionsobjekt und/oder einer Fusionsobjektgruppierung wenigstens in Abhängigkeit von dessen bzw. deren Lage und/oder Bewegung, insbesondere Bewegungsrichtung und/oder Bewegungsgeschwindigkeit, ein Schutzbereich zugewiesen wird.

18. Verfahren nach einem der Ansprüche 15 bis 17,
**dadurch gekennzeichnet,**
**dass** eine Bewegung wenigstens eines Fusionsobjekts und/oder einer Fusionsobjektgruppierung zu wenigstens einem zukünftigen Zeitpunkt vorhergesagt wird,
**dass** geprüft wird, ob zu und/oder bis zu dem Zeitpunkt ein Fusionsobjekt und/oder eine Fusionsgruppierung in den Schutzbereich oder das Fusionsobjekt bzw. die Fusionsobjektgruppierung in den Schutzbereich eines anderen Fusionsobjekts und/oder einer anderen Fusionsobjektgruppierung eintritt, und
**dass** bei Feststellung eines Eintritts ein entsprechendes Überwachungssignal abgegeben wird.

19. Verfahren nach einem der vorhergehenden Ansprüche,
**dadurch gekennzeichnet,**
**dass** geprüft wird, ob ein vorgegebener Abschnitt des Überschneidungsbereichs (36), insbesondere ein Gefahrbereich, in wenigstens einem der Videobilder verdeckt ist.

20. Verfahren nach einem der vorhergehenden Ansprüche,
**dadurch gekennzeichnet,**
**dass** auf wenigstens einem Objekt, das einem Gegenstand (38, 42) eines vorgegebenen Typs entspricht, wenigstens eine vorgegebene Markierungen (40, 44) erkannt wird, die charakteristisch für den Typ von Gegenstand ist,
**dass** dem Objekt entsprechende Teile wenigstens eines Videobildes mit Referenzdaten verglichen werden, die für den Typ von Gegenstand vorgegeben sind, und
**dass** in Abhängigkeit von dem Ergebnis des Vergleichs Veränderungen der Bedingungen in wenigstens einem Teil des Überwachungsbereichs, insbesondere Beleuchtungsbedingungen, und/oder eine Beeinträchtigung einer zur Erfassung des entsprechenden Videobildes verwendeten Videokamera erkannt werden.

21. Computerprogramm mit Programmcode-Mitteln, um das Verfahren nach einem der Ansprüche 1 bis 20 durchzuführen, wenn das Programm auf einem Computer (22) ausgeführt wird.

22. Computerprogrammprodukt mit Programmcode-Mitteln, die auf einem computerlesbaren Datenträger gespeichert sind, um das Verfahren nach einem der Ansprüche 1 bis 20 durchzuführen, wenn das Computerprogrammprodukt auf einem Computer (22) ausgeführt wird.

23. Vorrichtung zur Überwachung eines Überwachungsbereichs neben und/oder in einer Vorrichtung mit wenigstens einem angetriebenen, beweglichen Teil mit
wenigstens zwei Videokameras (18, 18', 20, 20'), mittels derer Videobilder zweier verschiedener Sichtfelder (32, 32', 34, 34') erfassbar sind, die sich in einem Überschneidungsbereich (36) in dem Überwachungsbereich (36) wenigstens teilweise überschneiden, und einer mit den Videokameras verbundenen Datenverarbeitungsvorrichtung (22), die zur Durchführung des Verfahrens nach einem der Ansprüche 1 bis 20 ausgebildet ist.

## Claims

1. A method for the monitoring of a monitored zone (36) next to and/or in an apparatus (12) having at least one driven, movable part (28) wherein
video images are used which were detected in a time sequence by at least two video cameras (18, 18', 20, 20') whose fields of view (32, 32', 34, 34') overlap at least in part in an overlap region 36 in the monitored zone (36);
on the basis of the first video images detected by a first one of the video cameras (18, 18', 20, 20'), a first recognition and/or tracking of virtual objects is carried out and, on the basis of the second video images detected by a second one of the video cameras (18, 18', 20, 20'), a second recognition and/or tracking of virtual objects is carried out, the virtual objects corresponding to real objects (24, 28, 38, 42) at least in the overlap region;
for the classification and/or determination of the position and/or the movement of at least one real object (24, 28, 38, 42) in the overlap region (36), virtual objects from the first and second virtual object recognition and/or tracking processes are determined
corresponding to the real object (24, 28, 38, 42)and data determined in each case for both virtual objects on their virtual object recognition and/or tracking are evaluated; and
at least one monitoring signal is formed in dependence on the evaluation,
**characterized in that**, for the definition of virtual objects in the video images, connected areas are determined which correspond to surface areas on a real object (24, 28, 38, 42) corresponding to a virtual object which have similar surface properties in accordance with at least one pre-determined criterion.

2. A method in accordance with claim 1, **characterized in that**, for the definition of the virtual objects in the video images, connected areas are determined which have similar gray values and/or colors and/or textures in accordance with at least one pre-determined criterion.

3. A method in accordance with claim 1 or claim 2, **characterized in that** at least one virtual object class is assigned to the virtual objects.

4. A method in accordance with any one of the preceding claims, **characterized in that** pre-determined features (40, 44) on virtual objects are recognized; and
**in that** at least one virtual object class is associated with the virtual objects in dependence on the recognized pre-determined features (40, 44).

5. A method in accordance with any one of the preceding claims, **characterized in that** only moving virtual objects are recognized and/or tracked in the virtual object recognition and/or tracking.

6. A method in accordance with claim 5, **characterized in that** a background which does not move and/or change over the course of time is eliminated from the used video images for the determination of at least one moving virtual object.

7. A method in accordance with any one of the preceding claims, **characterized in that** a fusion object is associated with virtual objects of the first and second object recognition and/or tracking processes corresponding to the same real object, (24, 28, 38, 42), with the position and/or movement and/or properties of said fusion object being determined in dependence on data with respect to the positions and/or movements and/or properties of the virtual objects corresponding to the real object (24, 28, 38, 42).

8. A method in accordance with claim 7, **characterized in that**, after formation of a fusion object in a cycle, its data with respect to its position and/or movement and/or properties are up-dated in dependence on the data of the virtual objects corresponding to the real object (24, 28, 38, 42) with respect to their positions and/or movements and/or properties in at least one following cycle.

9. A method in accordance with claim 7 or claim 8, **characterized in that** if, in the virtual object tracking of a virtual object associated with a fusion object, said virtual object is not recognized in a current video image, only the data of another virtual object associated with the fusion object with respect to its position and/or movement and/or properties are used for the determination of data with respect to the position and/or movement and/or properties of the fusion object.

10. A method in accordance with any one of the preceding claims, **characterized in that** one virtual object grouping or one fusion object grouping is formed from at least two virtual objects or fusion objects whose movement is coupled.

11. A method in accordance with any one of the claims 7 to 10, **characterized in that** a fusion object class or a class for virtual object groupings or fusion object groupings is associated with at least one fusion object and/or one virtual object grouping or fusion object grouping.

12. A method in accordance with claim 11, **characterized in that** pre-determined features on objects are recognized; and **in that** at least one fusion object class or a class for virtual object groupings or fusion object groupings is associated with the fusion objects and/or virtual object groupings or fusion object groupings in dependence on the recognized, pre-determined features (40, 44) on virtual objects associated with the fusion objects or virtual object groupings or fusion object groupings.

13. A method in accordance with any one of the preceding claims, **characterized in that** a class for virtual objects or fusion objects or virtual object groupings or fusion object groupings is associated with a virtual object and/or a fusion object and/or a virtual object grouping and/or a fusion object grouping in dependence on whether at least one section of the virtual object or of the fusion object or of the virtual object grouping or fusion object grouping is moved into a pre-determined section of the monitored zone (36).

14. A method in accordance with claim 13, **characterized in that** at least one class is used for fusion objects and/or fusion object groupings for fusion objects or fusion groupings critical to safety and at least one class is used for fusion objects and/or fusion object groupings for neutral fusion objects or fusion object groupings.

15. A method in accordance with any one of the claims 7 to 14, **characterized in that** a protected zone is assigned to at least one moving fusion object and/or to one moving fusion object grouping; and **in that** a check is made whether another fusion object and/or another fusion object grouping is entering into the protected zone.

16. A method in accordance with claim 15, **characterized in that** a class is assigned to at least one fusion object and/or one fusion object grouping; and **in that** a protected zone is assigned to the fusion object or to the fusion object grouping at least in dependence on the assigned class.

17. A method in accordance with claim 15 or claim 16, **characterized in that** a protected zone is assigned to a fusion object and/or to a fusion object grouping at least in dependence on its position and/or movement, in particular on its movement direction and/or movement speed.

18. A method in accordance with any one of the claims 15 to 17, **characterized in that** a movement of at least one fusion object and/or of one fusion object grouping at at least one future point in time is predicted;
**in that** a check is made whether a fusion object and/or a fusion grouping enters into the protected zone or the fusion object or the fusion object grouping enters into the protected zone of another fusion object and/or of another fusion object grouping; and
**in that** a corresponding monitoring signal is emitted on the finding of an entry.

19. A method in accordance with any one of the preceding claims, **characterized in that** a check is made whether a pre-determined section of the overlap region (36), in particular a danger zone, is hidden in at least one of the video images.

20. A method in accordance with any one of the preceding claims, **characterized in that** at least one pre-determined marking (40, 44) is recognized on at least one virtual object, which corresponds to a real object (38, 42) of a pre-determined type, said marking being characteristic for the type of real object;
**in that** parts of at least one video image corresponding to the virtual object are compared with reference data which are pre-determined for the type of real object; and
**in that** changes of the conditions in at least one part of the monitored zone, in particular lighting conditions, are recognized in dependence on the result of the comparison and/or a problem with a video camera used for the detection of the corresponding video image is recognized in dependence on the result of the comparison.

21. A computer program with program code means to carry out the method in accordance with any one of the claims 1 to 21, when the program is installed on a computer (22).

22. A computer program product with program code means which are stored on a computer legible data carrier to carry out the method in accordance with any one of the claims 1 to 21, when the computer program product is installed on a computer (22).

23. An apparatus for the monitoring of a monitored zone next to and/or in an apparatus having at least one driven movable part with at least two video cameras (18, 18', 20, 20') by means of which video images of two different fields of view (32, 32', 34, 34') can be detected which overlap at least partly in an overlap region (36) in the monitored zone (36); and
a data processing apparatus (22) which is connected to the video cameras and is made to carry out the method in accordance with any one of the claims 1 to 21.

## Revendications

1. Procédé pour surveiller une zone de surveillance (36) à côté et/ou dans un dispositif (12) comportant au moins une partie (28) mobile entraînée, dans lequel
on utilise des images vidéo qui ont été prises en séquence chronologique par au moins deux caméras vidéo (18, 18', 20, 20'), dont les champs visuels (32, 32', 34, 34') se chevauchent au moins partiellement dans une zone de chevauchement (36) dans la zone de surveillance (36),
on effectue, sur la base des premières images vidéo prises par une première des caméras vidéo (18, 18', 20, 20') et sur la base des deuxièmes images vidéo prises par une deuxième des caméras vidéo (18, 18', 20, 20'), une deuxième identification et/ou poursuite d'objets qui correspondent à des articles (24, 28, 38, 42) au moins dans la zone de chevauchement,
pour classifier et/ou déterminer la position et/ou le mouvement d'au moins un article (24, 28, 38, 42) dans la zone de chevauchement (36), on détermine des objets de la première et de la deuxième identification et/ou poursuite d'objets, qui correspondent à l'article (24, 28, 38, 42), et pour les deux objets, on évalue lors de leur identification et/ou poursuite d'objet des données respectives déterminées, et
au moins un signal de surveillance est formé en fonction de l'évaluation,
**caractérisé en ce que**
pour définir des objets, on détermine dans les images vidéo des zones contiguës qui correspondent à des zones de surface sur un article (24, 28, 38, 42) correspondant à un objet, lesquelles présentent des propriétés de surface similaires selon au moins un critère prédéterminé.

2. Procédé selon la revendication 1,
**caractérisé en ce que**
pour définir les objets, on détermine dans les images vidéo des zones contiguës qui présentent des valeurs de gris et/ou des couleurs et/ou des textures similaires selon au moins un critère prédéterminé.

3. Procédé selon la revendication 1 ou 2,
**caractérisé en ce que**
au moins une classe d'objet est attribuée aux objets.

4. Procédé selon l'une quelconque des revendications précédentes,
**caractérisé en ce que**
des caractéristiques (40, 44) prédéterminées sont reconnues sur des objets, et
**en ce qu'**en fonction des caractéristiques (40, 44) prédéterminées reconnues, au moins une classe d'objet est attribuée aux objets.

5. Procédé selon l'une quelconque des revendications précédentes,
**caractérisé en ce que**
lors de l'identification et/ou la poursuite d'objets, seuls des objets mobiles sont identifiés et/ou poursuivis.

6. Procédé selon la revendication 5,
**caractérisé en ce que**
pour déterminer au moins un objet mobile parmi les images vidéo utilisées, un arrière-plan qui ne se déplace pas et/ou qui ne se modifie pas au cours du temps est éliminé.

7. Procédé selon l'une quelconque des revendications précédentes,
**caractérisé en ce que**
un objet fusion est associé à des objets de la première et de la deuxième identification et/ou poursuite d'objets, qui correspondent au même article (24, 28, 38, 42), objet fusion dont la position et/ou le mouvement et/ou les propriétés sont déterminés en fonction de données par rapport aux positions et/ou aux mouvements et/ou aux propriétés des objets correspondant à l'article (24, 28, 38, 42).

8. Procédé selon la revendication 7,
**caractérisé en ce que**
après la formation d'un objet fusion dans un cycle, ses données sont actualisées, dans au moins un cycle suivant, par rapport à sa position et/ou à son mouvement et/ou à ses propriétés en fonction des données des objets correspondant à l'article (24, 28, 38, 42) par rapport à leurs positions et/ou leurs mouvements et/ou leurs propriétés.

9. Procédé selon la revendication 7 ou 8,
**caractérisé en ce que**
dans le cas où lors de la poursuite d'un objet associé à un objet fusion, celui-ci ne serait pas identifié dans une image vidéo, on utilise, pour déterminer des données par rapport à la position et/ou au mouvement et/ou aux propriétés de l'objet fusion, seulement les données d'un autre objet associé à l'objet fusion, par rapport à sa position et/ou à son mouvement et/ou à ses propriétés.

10. Procédé selon l'une quelconque des revendications précédentes,
**caractérisé en ce que**
à partir d'au moins deux objets ou objets fusion, dont le mouvement est couplé, est formé un groupement d'objets ou un groupement d'objets fusion.

11. Procédé selon l'une des revendications 7 à 10,
**caractérisé en ce que**
une classe d'objet fusion et/ou une classe pour groupements d'objets ou groupements d'objets fusion est associée à au moins un objet fusion et/ou à un groupement d'objet ou un groupement d'objets fusion.

12. Procédé selon la revendication 11,
**caractérisé en ce que**
des caractéristiques prédéterminées sont identifiées sur des objets, et **en ce qu'**au moins une classe d'objet fusion ou une classe pour des groupements d'objets ou d'objets fusion est associée aux objets fusion et/ou aux groupements d'objets ou d'objets fusion en fonction des caractéristiques (40, 44) prédéterminées reconnues sur des objets associés aux objets fusion ou aux groupements d'objets ou d'objets fusion.

13. Procédé selon l'une quelconque des revendications précédentes,
**caractérisé en ce que**
une classe pour objets ou pour objets fusion ou encore pour groupement d'objets ou groupement d'objets fusion est attribuée à un objet et/ou à un objet fusion et/ou à un groupement d'objets ou d'objets fusion en fonction du fait qu'au moins un tronçon de l'objet ou de l'objet fusion ou du groupement d'objets ou du groupement d'objets fusion est déplacé dans un tronçon prédéterminé de la zone de surveillance (36).

14. Procédé selon la revendication 13,
**caractérisé en ce que**
au moins une classe est utilisée pour des objets fusion et/ou pour des groupements d'objets fusion pour des objets fusion et/ou pour des groupements d'objets fusion critiques du point de vue sécurité et au moins une classe est utilisée pour des objets fusion et/ou pour des groupements d'objets fusion pour des objets fusion et/ou pour des groupements d'objets fusion neutres.

15. Procédé selon l'une des revendications 7 à 14,
**caractérisé en ce que**
une zone de protection est attribuée à au moins un objet fusion mobile et/ou à des groupements d'objets fusion mobiles, et **en ce qu'**on vérifie si un autre objet fusion et/ou un autre groupement d'objets fusion entre dans la zone de protection.

16. Procédé selon la revendication 15,
**caractérisé en ce que**
une classe est attribuée à au moins un objet fusion et/ou à un groupement d'objets fusion, et
**en ce qu'**une zone de protection est attribuée à l'objet fusion et/ou au groupement d'objets fusion au moins en fonction de la classe attribuée.

17. Procédé selon la revendication 15 ou 16,
**caractérisé en ce que**
une zone de protection est attribuée à l'objet fusion et/ou au groupement d'objets fusion au moins en fonction de sa position et/ou de son déplacement, en particulier en fonction de la direction de déplacement et/ou de la vitesse de déplacement.

18. Procédé selon l'une des revendications 15 à 17,
**caractérisé en ce que**
un mouvement d'au moins un objet fusion et/ou d'un groupement d'objets fusion est pronostiqué à au moins un moment à venir,
**en ce qu'**on vérifie si au moment et/ou jusqu'à ce moment un objet fusion et/ou un groupement d'objets fusion entre dans la zone de protection ou l'objet fusion et/ou le groupement d'objets fusion entre dans la zone de protection d'un autre objet fusion et/ou d'un autre groupement d'objets fusion, et
**en ce que** si l'on constate une entrée, un signal de surveillance correspondant est fourni.

19. Procédé selon l'une quelconque des revendications précédentes,
**caractérisé en ce que**
on vérifie si un tronçon prédéterminé de la zone de chevauchement (36), en particulier une zone de danger, est recouverte dans au moins une des images vidéo.

20. Procédé selon l'une quelconque des revendications précédentes,
**caractérisé en ce que**
sur au moins un objet, qui correspond à un article (38, 42) d'un type prédéterminé, on identifie au moins une marque (40, 44) prédéterminée qui est caractéristique pour le type de l'article,
**en ce que** des parties correspondant à l'objet, d'au moins une image vidéo sont comparées avec des données de référence qui sont prédéterminées pour le type de l'article, et
**en ce qu'**en fonction du résultat de la comparaison, on identifie des modifications des conditions dans au moins une partie de la zone de surveillance, en particulier des conditions d'éclairage, et/ou une influence néfaste sur une caméra vidéo utilisée pour prendre l'image vidéo correspondante.

21. Programme d'ordinateur avec moyens formant code programme pour mettre en oeuvre le procédé selon l'une des revendications 1 à 20, si le programme est exécuté sur un ordinateur (22).

22. Produit de programme d'ordinateur avec moyens formant code programme qui sont mémorisés sur un support de données lisible par ordinateur pour mettre en oeuvre le procédé selon l'une des revendications 1 à 20, si le produit de programme est exécuté sur un ordinateur (22).

23. Dispositif pour surveiller une zone de surveillance à côté et/ou dans un dispositif comportant au moins une partie mobile entraînée, comportant
au moins deux caméras vidéo (18, 18', 20, 20'), au moyen desquelles il est possible de prendre des images vidéos de deux différents champs visuels (32, 32', 34, 34') qui se chevauchent au moins partiellement dans une zone de chevauchement (36) dans la zone de surveillance (36), et
un dispositif de traitement de données (22) relié aux caméras vidéo, qui est réalisé pour mettre en oeuvre le procédé selon l'une des revendications 1 à 20.
